# EUROPÄISCHE PATENTSCHRIFT

(11) **EP 0 390 001 B1**
(45) Veröffentlichungstag und Bekanntmachung des Hinweises auf die Patenterteilung: **09.06.1993**
(21) Anmeldenummer: 90105633.3
(22) Anmeldetag: 24.03.1990
(51) Int. Cl.: B60R 25/02, B62D 1/04

(54) **Fahrzeugsicherungseinrichtung**
Vehicle safety device
Dispositif de sécurité pour véhicule

(30) Priorität: 29.03.1989 US 330051
(43) Veröffentlichungstag der Anmeldung: 03.10.1990
(73) Patentinhaber: Winner, James E., Sharon, Pennsylvania 16146 (US)
(72) Erfinder: Winner, James E., Sharon, Pennsylvania 16146 (US)
(74) Vertreter: Hennicke, Albrecht, Dipl.-Ing.

(56) Entgegenhaltungen:
- DE-A- 1 555 127
- DE-A- 2 710 444
- FR-A- 602 458
- US-A- 2 657 589
- US-A- 4 598 002

## Beschreibung

Die Erfindung betrifft eine Sicherungseinrichtung für Fahrzeuge mit einem Lenkrad, an dem ein Drehverhinderungsmittel anschließbar ist.

Es sind mechanische Diebstahlsicherungen bekannt (DE-A-2 710 444), welche eine Relativbewegung zwischen den Steuereinrichtungen im Inneren des Fahrzeuges verhindern. Diese mechanischen Diebstahlsicherungen bestehen aus zwei Haken, die an den Enden einer langgestreckten Verriegelungsvorrichtung angeordnet sind, die in ihrer Länge derart verstellbar ist, daß ein Haken an einem Pedal eingehängt und der andere Haken um den Kranz des Lenkrades herumgelegt werden kann. Das langgestreckte Gerät wird dann in Längsrichtung zusammengezogen und in dieser Stellung verriegelt und bildet eine starre und enge Verbindung zwischen dem Pedal und dem Lenkrad, so daß keines dieser Steueraggregate gegenüber dem anderen bewegt werden kann, was jedoch zum Fahren des Fahrzeuges erforderlich ist. Diese mechanischen Verriegelungen sind verhältnismäßig sicher und preisgünstig und weniger umständlich als elektronische Sicherungssysteme. Sie haben darüber hinaus den Vorteil, daß sie je nach Wunsch des Fahrers wahlweise eingesetzt werden können, aber nicht ständige Betätigung verlangen.

Um dem Lenkrad eines Kraftfahrzeuges ein ansprechenderes Aussehen zu verleihen, ist es auch bekannt, das meist aus einem Stahlring bestehende Tragelement des Lenkrades mit einem durchsichtigen Überzug aus einem elastischen, griffigen Material zu versehen und zwischen diesem durchsichtigen Überzug und dem Tragelement eine glänzende oder farbige Schicht anzuordnen, die durch den durchsichtigen Überzug durchscheint und dem Lenkrad ein ansprechendes Äußeres verleiht (US-A-2 657 589). Dieser Überzug kann eine auf das Tragelement aufgedampfte Metallschicht sein, es ist aber auch möglich, einen dünnen, glänzenden Aluminium- oder Edelstahldraht in aneinander angrenzenden Windungen um den Tragring des Lenkrades zu wickeln, bevor dieser mit dem durchsichtigen Überzug versehen wird.

Obgleich die oben erläuterten mechanischen Verriegelungsvorrichtungen selbst infolge ihrer massiven Konstruktion aus gehärtetem Stahl einer Zerstörung und Entfernung durch einen Dieb wirksam widerstehen, bieten sie keinen vollständig wirksamen Schutz, da ein Dieb nur den Kranz des Lenkrades durchschneiden oder durchkneifen muß, um in diesem einen Durchbruch zu erzeugen, durch den der Haken der Verriegelungsvorrichtung aus dem Lenkrad gezogen werden kann. Anders als beim Abtrennen des Pedalhebels wird ein an einer Stelle durchgetrennter Lenkradkranz einen Dieb am Fahren des Fahrzeuges kaum hindern und das durchgetrennte Lenkrad setzt auch den Wert des gestohlenen Fahrzeuges kaum herab.

Aufgabe der Erfindung ist es deshalb, eine Fahrzeugsicherungseinrichtung zu schaffen, die in Verbindung mit einer mechanischen Diebstahlsicherungsvorrichtung der eingangs näher erläuterten Art zuverlässig und wirksam den Diebstahl eines mit der Sicherungsvorrichtung versehenen Motorfahrzeuges verhindert und die wirtschaftlich leicht einzubauen und bequem zu handhaben ist.

Diese Aufgabe wird mit der Erfindung dadurch gelöst, daß das Lenkrad mit einer schnittwiderstandsfähigen Verstärkung versehen ist, welche das Lenkrad vor einem dieses zerstörenden Durchtrennen schützt, dessen normale Flexibilität jedoch nicht beeinträchtigt.

Diese Ausgestaltung hat den Vorteil, daß einem Durchtrennen des Lenkradkranzes ein wirksamer Widerstand entgegengesetzt wird und die bisherige Schwachstelle des mechanischen Sicherungssystems geschlossen wird.

Vorzugsweise ist die Verstärkung in Form eines Stahlkabels ausgebildet, das im Lenkradkranz eingebettet ist. Ein solches Stahlkabel kann schon in der Fabrik in einem neuen Fahrzeug eingebaut werden oder Teil eines Ersatzlenkrades sein, das in Kraftfahrzeugzubehörläden verkauft wird. Das im Lenkrad eingebettete Stahlkabel ist eine unaufdringliche Sicherungsvorrichtung, die absolut keiner Wartung oder einer besonderen Aufmerksamkeit durch den Fahrer bedarf.

Nach einem weiteren Merkmal der Erfindung kann der Lenkradkranz aus einem nichtmetallischen, äußeren Mantelring und einem in diesen eingebetteten, im wesentlichen kreisförmigen Metalltragring bestehen, um den das der Verstärkung dienende Stahlkabel schraubenlinienförmig herumgewickelt ist.

Die schnittwiderstandsfähige Verstärkung des Lenkrades kann auch dadurch erreicht werden, daß der kreisförmige Metalltragring an seiner Oberfläche gehärtet und hierdurch verstärkt ist.

Wenn das Lenkrad des zu sichernden Fahrzeuges einen Lenkradkranz aufweist, der teilweise mit einer Speiche oder mit mehreren Speichen verbunden ist, ist es zweckmäßig, die Verstärkung mindestens in denjenigen Bereichen des Lenkradkranzes vorzusehen, die nicht mit den Speichen verbunden sind, um diesen freien Lenkradkränzbereichen einen erhöhten Widerstand gegen Durchtrennen zu verleihen. Die als Stahlkabel ausgebildete Verstärkung wird dann zweckmäßig mit ihren Enden in einer Speiche verankert.

Bei allen Ausführungsformen der Erfindung wird das Lenkrad zwar gegen Durchtrennen oder Durchschneiden wirksam geschützt, es behält jedoch gleichwohl seine ursprüngliche Elastizität. Dies ist wichtig, da ein Lenkrad unter dem Stoß eines bei einem Unfall gegen das Lenkrad geschleuderten Fahrers ausweichen soll. Ein nach der Erfindung als Schnittsicherung vorzugsweise verwendetes Stahlkabel beeinträchtigt die Flexibilität des Lenkrades nicht, es setzt aber einem Schnitt mit einer Säge oder einem Bolzenschneider einen hohen Widerstand entgegen, so daß es die mechanische Haken-Sicherungsvorrichtung sinnvoll ergänzt.

Wird das Stahlkabel im Inneren des Lenkradkranzes angeordnet, leistet es einen Widerstand gegen Durchtrennen, tut aber der Biegsamkeit des Lenkradkranzes im Falle eines Unfalles keinen Abbruch.

Die Erfindung hat den Vorteile daß eine verbesserte Fahrzeugsicherung geschaffen wird, die zuverlässig ist und in wirksamer Weise einen Diebstahl des Kraftfahrzeuges verhindert.

Ein weiterer Vorteil der Erfindung besteht darin, daß eine Fahrzeugsicherungseinrichtung geschaffen wird, die wirtschaftlich und leicht zu bedienen ist. In vorteilhafter Weise wird mit der Erfindung ein Lenkrad so verstärkt,daß es der Zerstörungswut widersteht und eine an ihm befestigte Verriegelungseinrichtung nicht beseitigt werden kann. Ein nach der Erfindung ausgestaltetes Lenkrad kann in vorteilhafter Weise sehr wirksam mit einer Verriegelungseinrichtung zusammenwirken, welche das Lenkrad mit einem Kuplungs- oder Bremspedal verbindet und hierdurch eine ausgezeichnete Diebstahlsicherung darstellt. Durch die Verstärkung des Lenkradkranzes werden unbefugte Personen daran gehindert, die Verriegelungseinrichtung zu beseitigen oder unwirksam zu machen, welche das Lenkrad an einer Drehung und das Pedal an einer Betätigung hindert.

Weitere Merkmale und Vorteile der Erfindung ergeben sich aus der nachfolgenden Beschreibung und den Zeichnungen, in denen bevorzugte Ausführungsformen der Erfindung an Beispielen näher erläutert sind. Es zeigt:
- Fig. 1: eine bildliche Darstellung, teilweise im Schnitt, einer Fahrzeugsicherungseinrichtung nach der Erfindung,
- Fig. 1A: eine Vorderansicht, teilweise im Schnitt, eines Fahrzeuglenkrades in einer anderen Ausführungsform der Erfindung,
- Fig. 2: den Gegenstand der Fig. 1 in einem Teilquerschnitt nach Linie 2-2 in vergrößertem Maßstab,
- Fig. 3: einen Teillängsschnitt durch einen nach der Erfindung verstärkten Lenkradkranz,
- Fig. 4: einen Teillängsschnitt eines nach der Erfindung verstärkten Lenkradkranzes in einer anderen Ausführungsform,
- Fig. 5 bis 8: andere Ausführungsformen von nach der Erfindung verstärkten Lenkradkränzen im Querschnitt,
- Fig. 9: ein Lenkrad in einer weiteren Ausführungsform nach der Erfindung in einer Teilansicht und teilweise im Schnitt,
- Fig. 10: einen Teilschnitt des Lenkradkranzes nach Fig. 9,
- Fig. 11: den Gegenstand der Fig. 10 in einem Querschnitt nach Linie 11-11 und
- Fig. 12: eine weitere Ausführungsform eines Lenkrades nach der Erfindung im Querschnitt.

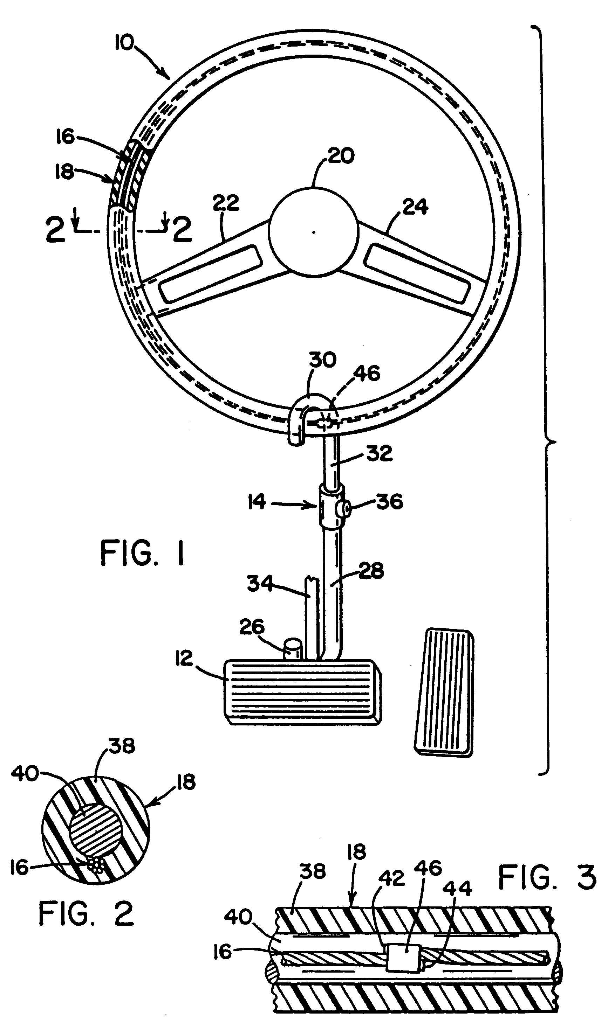

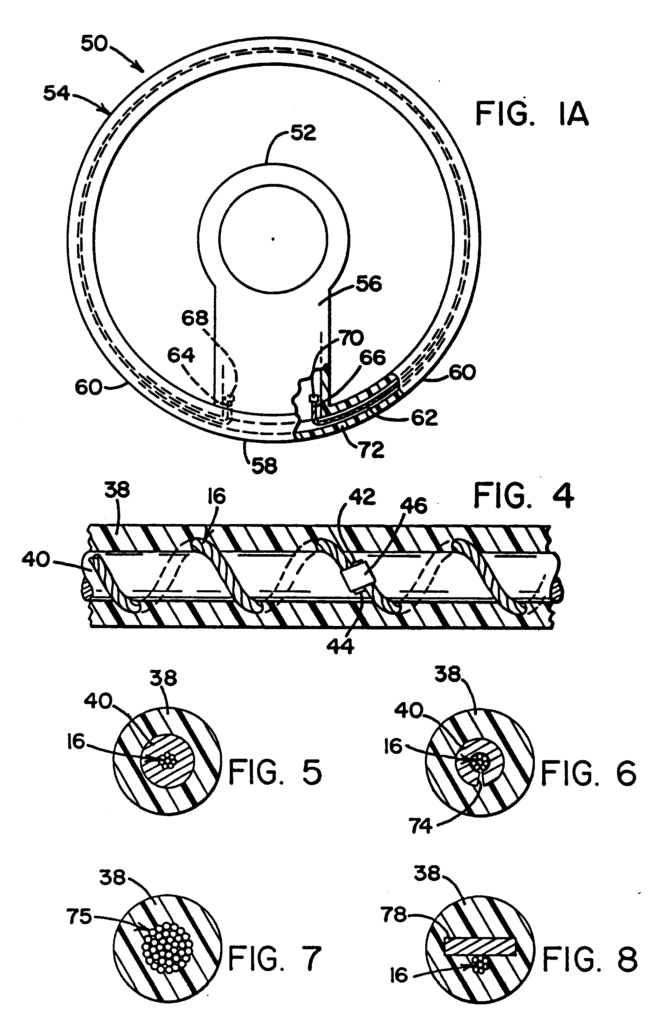

In Fig. 1 ist ein Lenkrad 10 dargestellte, das durch eine Verriegelungseinrichtung 14 mit einem Bremspedal 12 starr verbunden ist. Die Verriegelungseinrichtung 14 verhindert eine vollständige Drehung des Lenkrades 10 und hierdurch eine unbefugte Benutzung des Fahrzeuges, solange sich die Sicherungseinrichtung 14 in Stellung befindet. Hierbei wird das Lenkrad 10 durch ein Stahlkabel 16 in die Lage versetzt, einem Durchtrennen des Lenkradkranzes 18 zu widerstehen, welches sonst das Entfernen der Sicherungseinrichtung 14 aus der Sicherungsstellung ermöglichen würde, in der es das Lenkrad 10 umgreift.

Das Lenkrad 10 hat eine Nabe 20, die durch zwei Speichen 22 und 24 mit dem Lenkradkranz 18 verbunden ist. Die Verriegelungseinrichtung 14 besteht aus einem ersten Haken 26, der sich auf einem ersten rohrförmigen Teil 28 befindet und aus einem zweiten Haken 30, der auf einem zweiten rohrförmigen Element 32 angeordnet ist, das teleskopartig im Inneren des ersten rohrförmigen Teiles 28 verschiebbar ist. Die Sicherungseinrichtung 14 wird dadurch in Stellung gebracht, daß der erste Haken 26 um den Bremspedalhebel 34 gelegt wird und daß dann das zweite rohrförmige Element 32 teleskopartig in das erste rohrfömige Element 28 eingeschoben wird, um den zweiten Haken 30 in eine Lage zu bringen, in der er am Lenkradkranz 18 anliegt, wobei die rohrförmigen Teile durch ein Riegelschloß 36 sicher zusammengehalten werden, das in dem rohrförmigen Element 28 integriert ist. Eine vollständige Drehung des Lenkrades 10 wird dadurch verhindert, daß der zweite Haken 30 das Vorbeilaufen der Speiche 22 oder 24 am Haken verhindert, der mit dem Bremspedalhebel 34 fluchtet.

Wie aus den Fig. 2 und 3 hervorgeht, besteht der Lenkradkranz 18 aus einem äußeren Reifen oder Band 38, der aus Kunststoff, Fiberglas oder aus einem anderen nichtmetallischen Material hergestellt ist und aus einem inneren Metalltragelement 40, welches den Lenkradkranz 18 in einer Ringform aussteift, aber auch unter einem kräftigen Stoß biegsam nachgeben kann. Nach der Erfindung ist außerdem ein biegsames Stahlkabel 16 vorgesehen, das sich in Umfangsrichtung auf einer Ringbahn und um den Lenkradkranz 18 herum erstreckt und dessen beide einander gegenüberliegenden Enden 42 und 44 durch eine Klemme 46 miteinander verbunden sind. Die verdrillten Litzen des Stahlkabels 16 verleihen diesem eine ausreichende Flexibilität, so daß die Sicherheitsmerkmale des Lenkrades 10 nicht beeinträchtigt werden. Außerdem verleihen die Litzen, die vorzugsweise metallurgisch gehärtet sind, dem Lenkrad einen wesentlich größeren Widerstand gegen Durchtrennen als der flexible innere Stützring 40, der nur einen homogenen Querschnitt hat. Hierdurch wird mit der Erfindung ein Lenkrad geschaffen, welches in vorteilhafter Weise Sicherheit gegen Zerstörung bietet, die zu einem Diebstahl des Fahrzeuges führen würde. In Verbindung mit einer geeigneten Lenkradsicherung wird mit der Erfindung ein wirksames Fahrzeugsicherungssystem geschaffen, zu dem die Sicherungseinrichtung und das Lenkrad selbst gehört.

In Fig. 1A ist eine andere Ausführungsform der Erfindung dargestellt, die für ein Lenkrad 50 besonders geeignet ist, das eine Nabe 52, einen Lenkradkranz 54 und eine einzige, vergrößerte Speiche 56 aufweist, welche den Lenkradkranz in einen mit der Speiche verbundenen Lenkkranzabschnitt 58 und einen mit der Speiche nicht verbundenen Lenkkranzabschnitt 60 unterteilt. Um den nichtverbundenen Abschnitt 60 des Lenkradkranzes 54 erstreckt sich zwischen den beiden einander gegenüberliegenden Enden 64 und 66 ein im Lenkradkranz eingebettetes, schnittwiderstandsfähiges, flexibles Stahlkabel 62. An den Enden 64 und 66 des Kabels 62 sind zwei Anker 68 und 70 angeordnet, die das Herausziehen des Kabels 62 durch eine Lücke in dem nichtmetallischen äußeren Material 72 aus dem Lenkrad 50 verhindern. Da ein Durchtrennen des Lenkradkranzes 54 in dem mit der Speiche 56 verbundenen Bereich 58 keinen offenen Spalt im Lenkradkranz 54 erzeugen würde, durch den ein Verriegelungshaken herausgezogen werden konnte, ist das Stahlkabel 62 nur in dem nicht mit einer Speiche verbundenen Teil 60 wirksam angeordnet, der für ein Durchtrennen zum Entfernen eines Verriegelungshakens anfällig ist.

In den Fig. 4 bis 8 sind zusätzlich andere Ausführungsformen der Erfindung dargestellt, die in der Anordnung des schneidwiderstandsfähigen Stahlkabels zu dem flexiblen, inneren Tragelement des Lenkrades variieren. Das Stahlkabel 16 kann, wie in Fig. 4 gezeigt, um den inneren Tragteil 40 herumgewunden sein, es kann auch im Inneren des inneren Tragelementes 40 angeordnet sein, wie dies in Fig. 5 gezeigt ist, oder es kann durch einen Schlitz 74 im inneren Tragteil 40 eingeführt sein, wie dies in Fig. 6 gezeigt ist.

In Fig. 7 ist ein flexibles Stahlkabel 75 dargestellt, das einen verhältnismäßig größeren Querschnitt hat und eine größere Anzahl von Litzen hat, damit es eine größere Steifigkeit erlangt und hierdurch sowohl die Aufgabe des ringförmigen Tragelementes als auch die Aufgabe des schneidwiderstandsfähigen Verstärkungselementes übernehmen kann. In Fig. 8 ist ein Stahlkabel 16 in Verbindung mit einem inneren Tragelement 78 gezeigt, das einen flachen Rechteckquerschnitt aufweist.

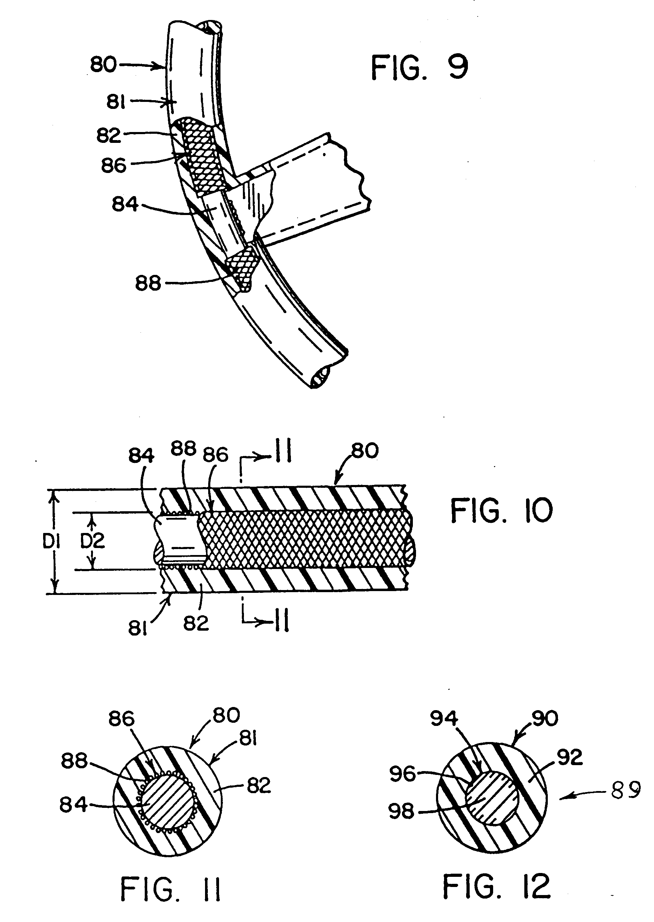

In Fig. 9 ist noch eine andere Ausführungsform der Erfindung dargestellt, bei der ein Lenkrad 80 mit einem Lenkradkranz 81 aus einem nichtmetallischen Außenreifen 82 und einem biegsamen, inneren, ringförmigen Tragelement 84 besteht, das mit einem schnittwiderstandsfähigen Stahl-Verstärkungselement 86 in Form von Litzen 88 versehen ist, die in einem Webmuster um das innere Tragelement 84 herum angeordnet sind. Das Stahllitzengewebe 88 verleiht dem Lenkrad 80 einen höheren Widerstand gegen Durchtrennen, da eine Bügelsäge, die über den Außendurchmesser D1 des Lenkradkranzes 81 bewegt wird, auf die Litzen 88 trifft, die sich kontinuierlich über den Außendurchmesser D2 des schneidwiderstandsfähigen Stahlverstärkungsteiles 86 erstrecken.

Eine weitere Ausführungsform der Erfindung ist in Fig. 12 dargestellt, wo ein Lenkradkranz 90 einen nichtmetallischen Ring 92 und einen schneidwiderstandsfähigen Stahlverstärkungsteil 94 in Form eines massiven Stahlstabes aufweist. Der Stahlstab 94 ist im Oberflächenbereich 96 metallurgisch gehärtet, um einem Schnitt zu widerstehen. Eine solche Härtung kann durch Induktionshärten und Abschreckhärten herbeigeführt werden, wobei der innere Bereich 98 ungehärtet bleibt, um eine Gesamtflexibilität aufrechtzuerhalten.

Die Erfindung ist nicht auf die dargestellten und beschriebenen Ausführungsbeispiele beschränkt, sondern es sind mehrere Ergänzungen und Abwandlungen möglich, ohne den Rahmen der Erfindung zu verlassen. Insbesondere können auch statt einem mehrere Stahlkabel vorgesehen sein, die parallel zueinander oder einander kreuzend um das Tragelement für den Lenkradkranz herumgeschlungen sind. Ferner können die Verstärkungslitzen nicht nur miteinander verwebt, sondern auch zu einem Schlauch geklöppelt sein, der ein inneres Lenkkranzelement aus Metall oder aus einem nichtmetallischen Stoff umgibt.

## Patentansprüche

1. Lenkradverstärkung für Fahrzeuge, an deren Lenkrad (10 bzw. 50 bzw. 89) ein Drehverhinderungsmittel (14) anschließbar ist und das aus einem Lenkradkranz (18 bzw. 54 bzw. 90) und aus einer (76) oder mehreren Speichen (22, 24) besteht und dessen Lenkradkranz einen Metallstützring (94) aufweist, der in einem nichtmetallischen, äußeren Umhüllungsring (92) eingebettet ist, **dadurch gekennzeichnet**, daß die Oberfläche (96) des Metallstützringes (94) durch Härtung verstärkt ist.

2. Lenkradverstärkung für Fahrzeuge, an deren Lenkrad (10 bzw. 15) ein Drehverhinderungsmittel (14) anschließbar ist, und das aus einem Lenkradkranz (18 bzw. 54 bzw. 90) und einer (76) oder mehreren Speichen (22, 24) besteht und wobei der Lenkradkranz ein inneres Metall stützmittel (40 und 16 bzw. 75 bzw. 78 und 16) aufweist, das in einem nichtmetallischen, äußeren Umhüllungsring (38 bzw. 92) eingebettet ist, **dadurch gekennzeichnet**, daß das Metallstützmittel ein mehr-litziges Stählkabel (16 bzw. 75) aufweist.

3. Lenkradverstärkung nach Anspruch 2, **dadurch gekennzeichnet**, daß das Stahlkabel (16) um einen Metallstützring (40) herumgewickelt ist.

4. Lenkradverstärkung nach Anspruch 3, **dadurch gekennzeichnet**, daß das Stahlkabel (17) nach einer Schraubenlinie um den Metallstützring (40) herumgewickelt ist.

5. Lenkradverstärkung nach Anspruch 2, **dadurch gekennzeichnet**, daß das Stahlkabel (16) im Inneren eines Metallstützringes (40) eingebettet ist.

6. Lenkradverstärkung nach Anspruch 5, **dadurch gekennzeichnet**, daß der Metallstützring an seinem Umfang einen Schlitz (74) zur Aufnahme des Stahlkabels (16) aufweist.

7. Lenkradverstärkung nach Anspruch 2, **dadurch gekennzeichnet**, daß das Metallstützmittel (40 und 16 bzw. 78 und 16) ein Stahlkabel (16) aufweist, das sich längs der Außenfläche des Metallstützringes (40 bzw. 78) erstreckt.

8. Lenkradverstärkung nach Anspruch 7, **dadurch gekennzeichnet**, daß der Metallstützring (78) einen abgeflachten Querschnitt aufweist.

9. Lenkradverstärkung nach Anspruch 7, **dadurch gekennzeichnet**, daß der Metallstützring (40) einen kreisförmigen Querschnitt hat.

10. Lenkradverstärkung nach einem der Ansprüche 1-7, mit einem Lenkrad (19 bzw. 50), dessen Lenkradkranz (18 bzw. 54) in einem Teilbereich mit einer einzelnen Speiche (56) oder mit mehreren Speichen (22, 24) verbunden ist, **dadurch gekennzeichnet**, daß die Verstärkung (62) mindestens in denjenigen Bereichen des Lenkradkranzes vorgesehen ist, die nicht mit den Speichen (56 bzw. 22 und 24) verbunden sind, um diesen freien Lenkradkranzbereichen einen erhöhten Widerstand gegen Durchschneiden zu verleihen.

11. Lenkradverstärkung nach einem der Ansprüche 1-7, **dadurch gekennzeichnet**, daß die Enden (64 und 66) des Verstärkungsmittels, das die Form eines Stahlkabels (66) annimmt, an einer Speiche (56) verankert sind.

## Claims

1. A steering wheel reinforcement for vehicles, to the steering wheel (10, 50, 89, respectively) of which a means of preventing rotation (14) can be attached, which steering wheel consists of a steering wheel rim (18, 54, 90, respectively) and of one (76) or more spokes (22, 24), and the steering wheel rim of which has a metal support ring (94) which is embedded in a non-metallic, outer covering ring (92), characterised in that the surface (96) of the metal support ring (94) is strengthened by hardening.

2. A steering wheel reinforcement for vehicles, to the steering wheel (10, 15, respectively) of which a means of preventing rotation (14) can be attached, which steering wheel consists of a steering wheel rim (18, 54, 90, respectively) and of one (76) or more spokes (22, 24), and wherein the steering wheel rim has an internal metal support means (40 and 16, 75, 78 and 16, respectively) which is embedded in a non-metallic, outer covering ring (38, 92, respectively), characterised in that the metal support means has a multi-strand steel cable (16, 75, respectively).

3. A steering wheel reinforcement according to claim 2, characterised in that the steel cable (16) is wound around a metal support ring (40).

4. A steering wheel reinforcement according to claim 3, characterised in that the steel cable (17) is wound around the metal support ring (40) in the form of a helix.

5. A steering wheel reinforcement according to claim 2, characterised in that the steel cable (16) is embedded inside the metal support ring (40).

6. A steering wheel reinforcement according to claim 5, characterised in that the metal support ring has a slot (74) at its periphery to receive the steel cable (16).

7. A steering wheel reinforcement according to claim 2, characterised in that the metal support means (40 and 16, 78 and 16, respectively) comprises a steel cable (16) which extends along the outer surface of the metal support ring (40, 78, respectively).

8. A steering wheel reinforcement according to claim 7, characterised in that the metal support ring (78) has a flattened cross-section.

9. A steering wheel reinforcement according to claim 7, characterised in that the metal support ring (40) has a circular cross-section.

10. A steering wheel reinforcement according to any one of claims 1 to 7, with a steering wheel (10, 50, respectively), the steering wheel rim (18, 54, respectively) of which is attached in a partial region to an individual spoke (56) or to a plurality of spokes (22, 24), characterised in that the reinforcement (62) is provided in at least those regions of the steering wheel rim which are not attached to the spokes (56, 22 and 24, respectively), in order to provide these free regions of the steering wheel rim with an increased resistance to being cut through.

11. A steering wheel reinforcement according to any one of claims 1 to 7, characterised in that the ends (64 and 66) of the reinforcement means, which takes the form of a steel cable (66), are anchored to a spoke (56).

## Revendications

1. Renfort de volant pour véhicules sur le volant (10 ou 50 ou 89) desquels un moyen empêchant la rotation (14) peut être raccordé, volant qui se compose d'une jante de volant (18 ou 54 ou 90) et d'un (76) ou plusieurs rayons (22, 24) et dont la jante de volant présente un anneau support en métal (94) qui est logé dans un anneau d'enveloppe (92) extérieur non métallique, caractérisé en ce que la surface (96) de l'anneau support métallique (94) est renforcée par durcissement.

2. Renfort de volant pour véhicules sur le volant (10 ou 15) desquels un moyen empêchant la rotation (14) peut être raccordé, volant qui se compose d'une jante de volant (18 ou 54 ou 90) et d'un (76) ou plusieurs rayons (22, 24) et dont la jante de volant présente un moyen support en métal (40 ou 16 ou 75 ou 78 et 16) intérieur qui est logé dans un anneau d'enveloppe (38 ou 92) extérieur non métallique, caractérisé en ce que le moyen protecteur en métal comporte un câble d'acier (16 ou 75) à plusieurs torons.

3. Renfort de volant selon la revendication 2, caractérisé en ce que le câble d'acier (16) est enroulé autour d'un anneau support en métal (40).

4. Renfort de volant selon la revendication 3, caractérisé en ce que le câble d'acier (17) est enroulé en spirale autour de l'anneau support en métal (40).

5. Renfort de volant selon la revendication 2, caractérisé en ce que le câble d'acier (16) est logé à l'intérieur d'un anneau support en métal (40).

6. Renfort de volant selon la revendication 5, caractérisé en ce que l'anneau support métallique présente sur sa circonférence une fente (74) pour recevoir le câble d'acier (16).

7. Renfort de volant selon la revendication 2, caractérisé en ce que le moyen support métallique (40 et 16 ou 78 et 16) présente un câble d'acier (16), qui s'étend le long de la surface extérieure de l'anneau support métallique (40 ou 78).

8. Renfort de volant selon la revendication 7, caractérisé en ce que l'anneau support métallique (78) présente une section aplatie.

9. Renfort de volant selon la revendication 7, caractérisé en ce que l'anneau support métallique (40) a une section circulaire.

10. Renfort de volant selon l'une quelconque des revendications 1 à 7, avec un volant (19 ou 50), dont la jante de volant (18 ou 54) est reliée dans un secteur partiel avec un seul rayon (56) ou avec plusieurs rayons (22, 24), caractérisé en ce que le renfort (62) est prévu au moins dans les secteurs de la jante de volant qui ne sont pas reliés avec les rayons (56 ou 22 et 24), afin de conférer à ces secteurs libres de la jante de volant une résistance accrue à la coupe.

11. Renfort de volant selon l'une quelconque des revendications 1 à 7, caractérisé en ce que les extrémités (64 et 66) du moyen de renfort, qui prend la forme d'un câble d'acier (66), sont ancrées sur un rayon (56).
